# EUROPEAN PATENT APPLICATION

(11) **EP 4 215 058 A1**
(43) Date of publication of application: **26.07.2023**
(21) Application number: 23151872.1
(22) Date of filing: 17.01.2023
(51) Int. Cl.: A23L 13/70, A23B 4/06, A23B 4/023, A23L 13/40, A23L 13/76

(54) **METHOD FOR PRODUCING A CURED RAW HAM**

(30) Priority: 19.01.2022 IT 202200000824
(71) Applicant: VE.MA.C. Societa' A Responsabilita' Limitata, 41051 Castelnuovo Rangone (MO) (IT)
(72) Inventor: COSTANTINI, Maurizio, 41057 Spilamberto (MO) (IT)
(74) Representative: Luppi Intellectual Property S.r.l.

(57) **Abstract**

A method for producing cured raw ham to be sliced including the following steps:
- trimming a pork leg with bone by removing excess parts of fat, cartilage and rind;
- deboning the pork leg with bone by removing the bone from the pork leg, obtaining a trimmed and deboned pork leg;
- salting the trimmed and deboned pork leg obtaining a salted pork leg and loading said salted pork leg onto curing frames, said salting occurring after said trimming and said deboning;
- curing the salted pork leg on said curing frames obtaining a cured raw ham;
- unloading the cured raw ham from said curing frames and washing said cured raw ham;
- trimming the cured raw ham by removing parts of surface or oxidized meat obtaining a trimmed cured raw ham;
- forming and freezing the trimmed cured raw ham in a mould for forming hams obtaining a cured raw ham to be sliced.

## Description

The present invention relates to a method for producing a food product, in particular a raw ham, so shaped as to take on a substantially parallelepipedon shape, so as to be able to undergo subsequent treatments like, for example, a freezing treatment to then be sliced by high-speed industrial slicing machines.

The known method for producing a raw ham provides trimming a pork leg that consists of removing excess rind and fat.

The trimmed pork leg undergoes first salting, which is followed by second salting. After each salting step, the pork leg is left to rest on horizontal racks.

Subsequently, the pork leg is hung on racks with a twine and is left to rest.

The pork leg is then subjected to cleaning and washing, which are followed by the steps of drying and pre-curing.

After pre-curing, the pork leg is subjected to the so-called "greasing" step, which is followed by final curing.

The method disclosed above enables a raw ham to be obtained after at least 9 months from the start of the production process.

The raw ham obtained has to be deboned and trimmed before being sliced.

The deboned raw ham can undergo a forming that gives it a substantially parallelepipedon shape, so as to be able to undergo further treatments, such as for example a freezing treatment to then be sliced with high-speed industrial slicing machines.

One drawback of the known method for producing raw ham is the lengthy production time, with resulting high production costs and capital immobilization.

Another drawback of the known method is uneven quality of the finished product, because of the impossibility of having even distribution of the salt in the end product.

One drawback of the known method is the difficulty of deboning the cured raw ham.

A further drawback is the impossibility of recovering offcuts of ham obtained following deboning.

Another drawback of the known method is the use of a great number of workers for producing cured raw ham.

The object of the present invention is to provide a method for producing raw ham to be sliced, with less labour, shorter curing time and lower production cost.

This object is achieved by a method according to claim 1.

A further object of the present invention is to provide a method for producing healthier cured raw ham to be sliced, with a lower salt content than cured raw ham obtained with a traditional method.

Further features and advantages will be clear from the following description, provided merely by way of non-limiting example, with reference to the attached drawings in which:
Figure 1 shows a pork leg with bone;
Figure 1A shows the pork leg of Figure 1 during the trimming and deboning steps;
Figure 1B shows a pork leg of Figure 1 after trimming and deboning;
Figure 2 shows curing frames with horizontal shelves used for drying and curing the pork leg of Figure 1B after salting;
Figure 3 shows a cured raw ham during the trimming step;
Figure 4 shows a mould for forming hams;
Figure 5 shows a ham shaped with a substantially parallelepipedon shape after the forming step by the mould of Figure 4;
Figure 6 shows the ham shaped with a substantially parallelepipedon shape of Figure 5 stored in thermoformed bags;
Figure 7 shows a flow chart of the process according to the invention for producing cured raw ham to be sliced, with less labour, a shorter curing time and lower production cost.

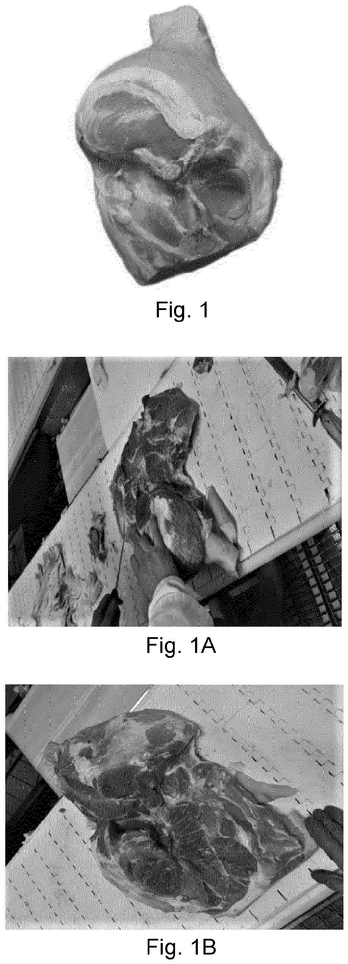

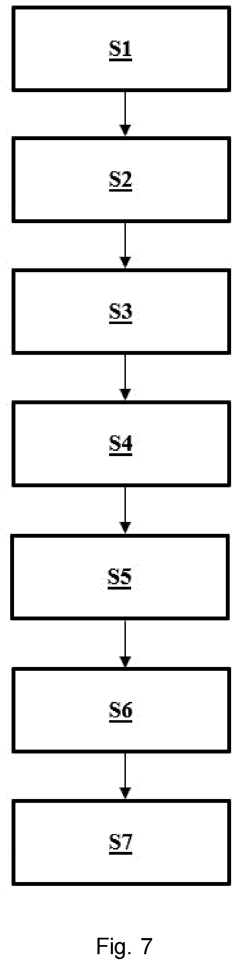

With reference to the steps set out in the diagram in Figure 7, a method is described for producing a cured raw ham to be sliced using a pork leg with bone, shown in Figure 1.

The pork leg with bone used preferably has a weight comprised between 12 and 14 kg.

The method provides, in step S1, trimming the pork leg with bone, removing excess rind and fat with suitable cutting instruments.

After trimming, the method provides, in step S2, deboning the pork leg with bone, by removing the bone from the pork leg with suitable cutting instruments.

After trimming and deboning, a deboned and trimmed pork leg is obtained, illustrated in figure 1B, having a weight substantially between 9 and 9.5 kg.

The trimmed and deboned pork leg is subsequently brought to a temperature between 1°C and 5°C.

The method then provides a salting step S3.

In the salting step, a mixture containing salt and aromas as preferred can be spread over the trimmed and deboned pork leg.

The quantity of salt that can be used to be spread over the trimmed and deboned pork leg during the salting step can be comprised between 3 kg and 4 kg of salt (NaCl) for every 100 kg of weight of the trimmed and deboned ham. For example, the quantity of salt used during the salting step can be equal to 3.4 kg for every 100 kg of weight of the trimmed and deboned ham.

The quantity of aromas that can be used during the salting step can be comprised between 360 g and 440 g for every 100 kg of weight of the trimmed and deboned ham. For example, the quantity of aromas used during the salting step can be equal to 400 g for every 100 kg of weight of the trimmed and deboned ham.

The aromas can be used to give the product a taste of cured meat, for example a taste of a ham with bone cured for at least 12 months.

The aromas can comprise a mixture of aromatizing substances.

In particular, the mixture of aromatizing substances can comprise, for every 100 g of mixture: 30 g of salt (NaCl), 14 g of maltodextrin, 5 g of potassium phosphate (E340), 2 g of calcium phosphate (E341), 1.4 g of fat (for example pork fat), 1.4 g of modified starch (E1450), 0.4 g of ascorbic acid (E300) and other natural aromatizing substances.

The quantities indicated can vary by 10% more or less.

In addition, preservatives like sodium nitrite (E250) and potassium nitrate (E252) can be added in compliance with legally permitted quantities.

A starter can also be used to improve the appearance of the meat, giving the meat a stable and shiny red colour, and to prevent the development of pathogenic bacteria and contaminating microorganisms that could cause the meat to go rancid.

In particular, the starter can comprise a lyophilized concentrate comprising a specific strain of Staphylococcus Xylosus that is ideal for cold meats.

The quantity of starter used can be 15 g ± 1.5 g for every 100 kg of weight of the trimmed and deboned ham.

The salting step can be run at a temperature comprised between 1 and 5°C, with a relative humidity comprised between 75% and 98%. For example, the salting step can be run at a temperature comprised between 2 and 4°C, with a relative humidity comprised between 80% and 95%.

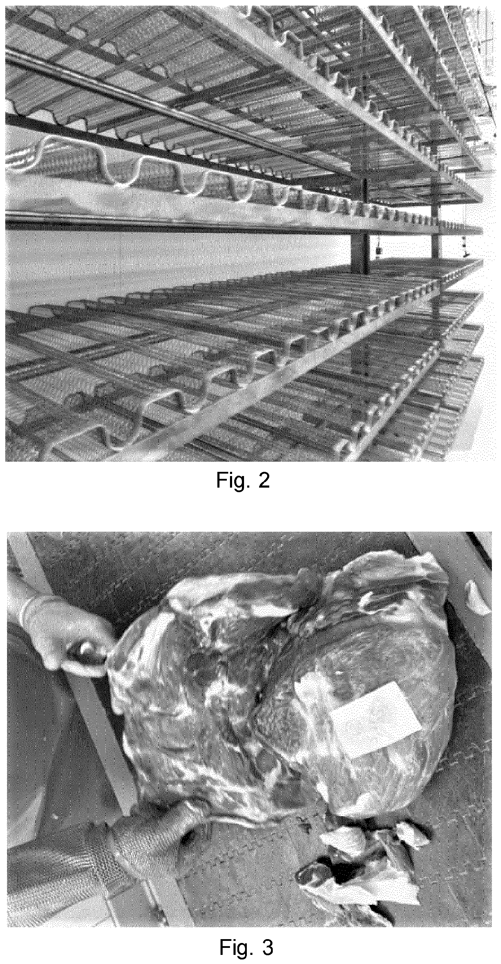

After salting, the method provides loading the pork leg onto frames suitable for the resting, drying and curing steps, shown in Figure 2, and, in step S4, drying and curing the pork leg on curing frames.

The curing frames used comprise perforated horizontal shelves that ensure optimum circulation of the air around the pork leg and enable the product to be dried appropriately. The pork leg remains on the curing frames, even without having to be unloaded therefrom, until the end of the curing process.

Curing can be evaluated by checking the degree of dehydration and weight loss of the meat. The end of the curing process occurs when the cured raw ham shows a weight loss comprised between 30% and 45%, for example a 35% weight loss, compared with the weight of the trimmed and deboned pork leg before curing. The check is a sample check on hams of the same batch.

The permanence on curing frames can last between 10 weeks and 16 weeks, depending on the power of the curing plants used, on different degrees of temperature and on relative humidity.

During the permanence on curing frames, the raw ham can be subjected to a procedure of ventilated cold drying and/or a procedure of heat drying.

In particular, during the curing step, the raw ham can be subjected to a procedure of ventilated cold drying at temperatures comprised between 0°C and 6°C, with dehumidification cycles having a pre-established length alternate with cycles of pre-established length during which no dehumidification is performed.

The procedure of ventilated cold drying can include a first step of ventilated cold drying, a second step of ventilated cold drying, a third step of ventilated cold drying and a fourth step of ventilated cold drying at temperatures comprised between 0°C and 6°C, wherein in each of said first step, second step, third step and fourth step dehumidification cycles having a pre-established length alternate with cycles of pre-established length during which no dehumidification is performed.

The first ventilated cold drying step has a length of 168 ± 24 hours at a temperature comprised between 0°C and 5°C, in which dehumidification cycles lasting 90 ± 10 minutes alternate with cycles of 30 ± 5 minutes during which no dehumidification is performed; The second ventilated cold drying step has a length of 168 ± 24 hours at a temperature comprised between 1°C and 6°C, in which dehumidification cycles lasting 30 ± 5 minutes alternate with cycles of 30 ± 5 minutes during which no dehumidification is performed; The third ventilated cold drying step has a length of 168 ± 24 hours at a temperature comprised between 1°C and 6°C, in which dehumidification cycles lasting 20 ± 5 minutes alternate with cycles of 20 ± 5 minutes during which no dehumidification is performed;
The fourth ventilated cold drying step has a length of 696 ± 72 hours at a temperature comprised between 1°C and 6°C, in which dehumidification cycles lasting 15 ± 5 minutes alternate with cycles of 15 ± 5 minutes during which no dehumidification is performed. After the procedure of ventilated clod drying, the raw ham can be subjected to a procedure of heat drying at temperatures comprised between 7°C and 23°C, with relative humidity comprised between 60 and 80%.

The procedure of heat drying can include a first heat drying step, a second heat drying step, a third heat drying step, a fourth heat drying step and a fifth heat drying step, at temperatures comprised between 7°C and 23°C, with relative humidity comprised between 60 and 80%, wherein each of said steps has a pre-established length.

The first heat drying step has a length of 2 ± 0.5 hours at a temperature comprised between 7°C and 15°C, with relative humidity comprised between 60 and 80%;

The second heat drying step has a length of 2 ± 0.5 hours at a temperature comprised between 9°C and 17°C, with relative humidity comprised between 60 and 80%;

The third heat drying step has a length of 2 ± 0.5 hours at a temperature comprised between 11°C and 19°C, with relative humidity comprised between 60 and 80%;

The fourth heat drying step has a length 2 ± 0.5 hours at a temperature comprised between 13°C and 21°C, with relative humidity comprised between 60 and 80%;

The fifth heat drying step has a length of 8 ± 2 hours at a temperature comprised between 15°C and 23°C, with relative humidity comprised between 60 and 80%.

After the procedure of heat drying, the raw ham can be subjected to a final curing step lasting 720 ± 180 hours at a temperature comprised between 11°C and 19°C, with relative humidity comprised between 65 and 85%.

After curing, a cured raw ham is obtained with a lower weight than the trimmed and deboned pork leg before the curing step. In particular, the weight of the product before curing can decrease by 34% to 45% following the rest, drying and curing step.

The method provides unloading the cured raw ham from the curing frames and subjecting the cured raw ham, in step S5, to washing to remove excess salt and, in step S6, to trimming, as shown in Figure 3.

Excess salt means, for example, the salt that crystallizes on the surface of the product. Washing further enables any mould or yeast to be eliminated that may develop on the raw ham during the curing process.

In the trimming step, excess meat parts are removed by using suitable cutting instruments.

Excess meat parts mean, for example, the surface part of the product that during the curing process may have become of a very hard consistency and the fat that may be subject to rancidification.

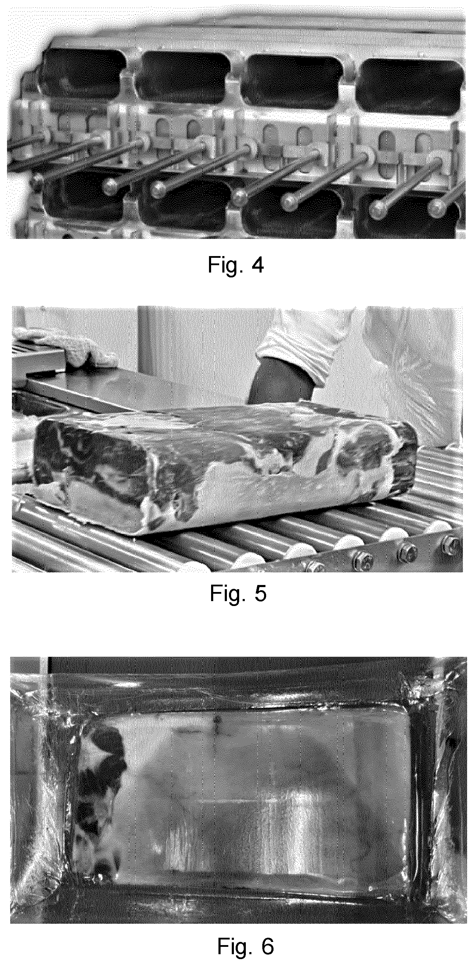

After trimming, as in step S7 of the diagram in Figure 7, the method provides forming and subsequently freezing the cured raw ham in a mould for forming hams, shown in Figure 4, for example a mould for forming hams of the type disclosed and claimed in Italian patent IT1392094 and in European patent EP2191724.

Forming enables a cured raw ham to be sliced with a substantially parallelepipedon shape to be obtained that is shown in Figure 5.

The raw ham to be sliced can be placed in a vacuum wrap or stored in thermoformed bags, as illustrated in Figure 6, in order to be able to be sliced by industrial sliding machines and packaged in sealed bags for sale.

The method for producing raw ham to be sliced according to the invention enables production costs, curing time and labour employed to be reduced.

In particular, deboning the fresh ham enables offcuts of meat that are obtained during deboning to be retrieved which can be used for producing other food products.

Further, deboning the fresh ham is easier and faster than deboning a cured ham and it is possible to perform deboning even without the use of instruments like a leg saw, joint cutter and the like.

The method according to the invention reduces curing time with respect to a traditional production method that provides a minimum curing time of 8-12 months, enabling the cured raw ham to be obtained in a period of time comprised between 10 and 16 weeks, enabling 4-6 production cycles a year to be run, with a significant increase in productivity and cost savings.

The method according to the invention provides less manipulation of the raw ham than does the known method, permitting less labour, due to less manipulation of the product with a resulting financial saving.

The method for producing cured raw ham to be sliced according to the invention makes it easier to obtain an end product with even quality, due to even distribution of the salt in the end product, which meets required quality standards.

The method according to the invention further enables a healthier product to be obtained with a lower salt content than a raw ham obtained with traditional curing.

The method according to the present invention can be further applied to speck to be sliced, enabling speck to be obtained with less labour, shorter curing time and lower production cost, compared with a traditional speck.

In order to obtain speck with the method of the present invention, different temperature and relative humidity values can be used from those used to obtain the raw ham.

Further, different aromas and different quantities of aroma can be used from those disclosed above.

## Claims

1. Method for producing cured raw ham to be sliced including the following steps:
- a first step including trimming a pork leg with bone by removing excess fat, cartilage and rind;
- a second step including deboning the pork leg with bone by removing the bone from the pork leg, obtaining a trimmed and deboned pork leg;
- a third step including salting the trimmed and deboned pork leg obtaining a salted pork leg and loading said salted pork leg onto curing frames, said salting occurring after said trimming and said deboning;
- a fourth step including curing the salted pork leg on said curing frames obtaining a cured raw ham;
- a fifth step including unloading the cured raw ham from said curing frames and washing said cured raw ham;
- a sixth step including trimming the cured raw ham by removing parts of surface or oxidized meat obtaining a trimmed cured raw ham;
- a seventh step including forming and freezing the trimmed cured raw ham in a mould for forming hams obtaining a cured raw ham to be sliced.

2. Method according to claim 1 wherein said curing frames include perforated substantially horizontal shelves.

3. Method according to any one of the preceding claims, wherein said salting includes spreading said trimmed and deboned pork leg with a mixture comprising water, salt and aromas.

4. Method according to claim 3, wherein said mixture includes:
from 3 kg to 4 kg of salt for every 100 kg by weight of the trimmed and deboned ham,
from 360 g to 440g of aromas for every 100 kg by weight of the trimmed and deboned ham, wherein preferably said mixture includes:
3.4 kg of salt for every 100 kg by weight of the trimmed and deboned ham,
400 g of aromas for every 100 kg by weight of the trimmed and deboned ham.

5. Method according to claim 4, wherein said aromas include a mixture of aromatizing substances having the following composition, referring to 100g of mixture: 30 g of salt,
14 g of maltodextrin,
5 g of potassium phosphate,
2 g of calcium phosphate,
1.4 g of fat,
1.4 g of modified starch,
0.4 g of ascorbic acid,
natural aromatizing substances,
the quantity of each ingredient of the mixture may be varied by 10% more or less than the indicated value.

6. Method according to one of claims 3 to 5, further including adding to said salt and to said aromas a freeze-dried concentration of Staphylococcus Xylosus in quantities equal to 15 g ± 1.5 g for every 100 kg by weight of the trimmed and deboned ham.

7. Method according to one of preceding claims, wherein said salting occurs at a temperature comprised between 1 °C and 5 °C, at a relative humidity comprised between 75% and 98%, preferably at a temperature comprised between 2 °C and 4 °C, at a relative humidity comprised between 85% and 95%

8. Method according to one of preceding claims, wherein said curing has a duration comprised between 10 and 16 weeks.

9. Method according to claim 8, wherein said curing includes:
a first step of ventilated cold drying, a second step of ventilated cold drying, a third step of ventilated cold drying and a fourth step of ventilated cold drying at temperatures comprised between 0°C and 6°C, wherein in each of said first step, second step, third step and fourth step dehumidification cycles having a pre-established length alternate with cycles of pre-established length during which no dehumidification is performed.

10. Method according to claim 9, wherein said first ventilated cold drying step has a length of 168 ± 24 hours at a temperature comprised between 0°C and 5°C, in which dehumidification cycles lasting 90 ± 10 minutes alternate with cycles of 30 ± 5 minutes during which no dehumidification is performed;
said second ventilated cold drying step has a length of 168 ± 24 hours at a temperature comprised between 1°C and 6°C, in which dehumidification cycles lasting 30 ± 5 minutes alternate with cycles of 30 ± 5 minutes during which no dehumidification is performed;
said third ventilated cold drying step has a length of 168 ± 24 hours at a temperature comprised between 1°C and 6°C, in which dehumidification cycles lasting 20 ± 5 minutes alternate with cycles of 20 ± 5 minutes during which no dehumidification is performed;
said fourth ventilated cold drying step has a length of 696 ± 72 hours at a temperature comprised between 1°C and 6°C, in which dehumidification cycles lasting 15 ± 5 minutes alternate with cycles of 15 ± 5 minute during which no dehumidification is performed.

11. Method according to claim 9, or 10, further including a first heat drying step, a second heat drying step, a third heat drying step, a fourth heat drying step and a fifth heat drying step, at temperatures comprised between 7°C and 23°C, with relative humidity comprised between 60% and 80%, wherein each of said steps has a pre-established length.

12. Method according to claim 11 wherein said first heat drying step has a length of 2 ± 0.5 hours at a temperature comprised between 7°C and 15°C, with relative humidity comprised between 60% and 80%;
said second heat drying step has a length of 2 ± 0.5 hours at a temperature comprised between 9°C and 17°C, with relative humidity % comprised between 60 and 80%;
said third heat drying step has a length of 2 ± 0.5 hours at a temperature comprised between 11°C and 19°C, with relative humidity % comprised between 60% and 80%;
said fourth heat drying step has a length of 2 ± 0.5 hours at a temperature comprised between 13°C and 21°C, with relative humidity % comprised between 60% and 80%;
said fifth heat drying step has a length of 8 ± 2 hours at a temperature comprised between 15 and 23°C, with relative humidity % comprised between 60 and 80%.

13. Method according to claim 11, or 12, further including a final curing step lasting 720 ± 180 hours at a temperature comprised between 11 °C and 19°C, with relative humidity % comprised between 65% and 85%.

14. Method according to one of preceding claims, including checking the weight of said ham, after said salting and before said curing and checking the weight loss of said ham during said curing step with a sample check on hams of the same batch of hams being cured and considering said curing step to be concluded if the weight loss is comprised between 30% and 45% of the weight of the ham, checked after said salting and before said curing.

15. Method according to any one of preceding claims further comprising the step of vacuum packing, or packing and sealing in thermoformed bags, the cured raw ham to be sliced, after said forming and said freezing.

16. Use of the method according to one of the preceding claims, for producing speck.
